# EUROPEAN PATENT SPECIFICATION

(11) **EP 3 783 777 B1**
(45) Date of publication and mention of the grant of the patent: **23.07.2025**
(21) Application number: 20191444.7
(22) Date of filing: 18.08.2020
(51) Int. Cl.: H02K 5/08, H02K 5/10, H02K 5/128, H02K 5/15, H02K 5/22, H02K 7/06, H02K 11/33, F16K 31/04, F25B 41/35

(54) **MOTOR OPERATED VALVE**
MOTORBETRIEBENES VENTIL
VANNE MOTORISÉE

(30) Priority: 22.08.2019 JP 2019151791
(43) Date of publication of application: 24.02.2021
(73) Proprietor: TGK CO., Ltd., Tokyo 193-0942 (JP)
(72) Inventor: MATSUMOTO, Michio, Tokyo 193-0942 (JP); YUASA, Tomohiro, Tokyo 193-0942 (JP); SAEKI, Shinji, Tokyo 193-0942 (JP); MIURA, Youichi, Tokyo 193-0942 (JP)
(74) Representative: Meissner Bolte Nürnberg

(56) References cited:
- WO-A1-2016/091941
- CN-A- 107 620 824
- JP-B2- 4 253 530
- US-A1- 2009 294 713

## Description

The present invention relates to a motor operated valve and, in particular, to a sealing structure.

An automotive air conditioner typically includes a compressor, a condenser, an expander, an evaporator, and so forth arranged in a refrigeration cycle. For the expander, a motor operated expansion valve that enables accurate control of the valve opening degree by means of a stepping motor as a drive unit has been increasingly used. Such a motor operated expansion valve includes a mechanism for causing a valve element supported by an end of a shaft to touch and leave a valve seat formed on a body. For the movement of touching and leaving the valve seat, a technology of converting rotational movement of a rotor into translational movement of the shaft by employing a feed screw mechanism has been proposed.

Motor operated expansion valves with circuit boards have recently been increasingly used. In a case where a circuit board is mounted on a motor operated expansion valve, the circuit board needs to be isolated from external air in terms of corrosion protection of the circuit board. Thus, a technique of performing molding on a stator a plurality of times, and enclosing a circuit board by the molded resin obtained by the molding and a cap member formed by a separate process is known (refer to CN 107345590 A, for example).

### Related Art List

### (1) CN 107345590 A

According to the motor operated expansion valve described in CN 107345590 A, molding is performed twice on the stator. In this case, however, a molded resin is obtained by second molding performed on a molded resin obtained by first molding, and it is difficult to achieve airtightness between the two molded resins (a resin contact portion). In the motor operated expansion valve of CN 107345590 A, the resin contact portion extends from outside the motor operated expansion valve to a space in which the circuit board is contained. Thus, with the structure of the motor operated expansion valve of CN 107345590 A, entry of external air into the space containing the circuit board cannot be completely prevented. Such a problem is not limited to motor operated expansion valves but may be similarly present in various motor operated valves used for various applications.

The documents CN 107620824 A, WO 2016/091941 A1 and US 2009/294713 A1 disclose a motor operated valve comprising a stator unit, a rotor for driving a valve element and a can containing the rotor.

The present invention has been made in view of the above, and one object thereof is to provide a motor operated valve that achieves waterproof property of a space containing a circuit board.

The invention is a motor operated valve as defined in claim 1.

According to the invention, a seal portion is provided between one open end portion of the cylindrical case containing the circuit board therein and the cap member, and a seal portion is provided between the other open end portion of the case and the body. This prevents entry of external air into a space in the case. Specifically, this prevents entry of moisture into the space containing the circuit board.
FIG. 1 is a cross-sectional view illustrating a structure of a motor operated valve unit according to an embodiment;
FIG. 2 is a cross-sectional view illustrating a structure of a motor operated valve;
FIG. 3 illustrates a structure of a stator unit;
FIGS. 4A and 4B are cross-sectional views illustrating fitting of a case and a cap member;
FIG. 5 is a partial enlarged view of part X in FIG. 4;
FIGS. 6A and 6B are cross-sectional views illustrating a process of mounting a stator unit on a first body;
FIG. 7 is a cross-sectional view of a motor operated valve according to a first modification;
FIG. 8 is a cross-sectional view of a motor operated valve according to a second modification; and
FIG. 9 is a cross-sectional view of a motor operated valve according to a third modification.

An embodiment of the invention will now be described. The description is not intended to limit the scope of the present invention, but to exemplify the invention.

The embodiment of the present invention will now be described in detail with reference to the drawings. In the description below, for convenience of description, the positional relationship in each structure may be expressed with reference to how the structure is depicted in the drawings. In the following embodiment and modifications thereof, components that are substantially the same will be designated by the same reference numerals and redundant description thereof may be omitted as appropriate.

### [Embodiment]

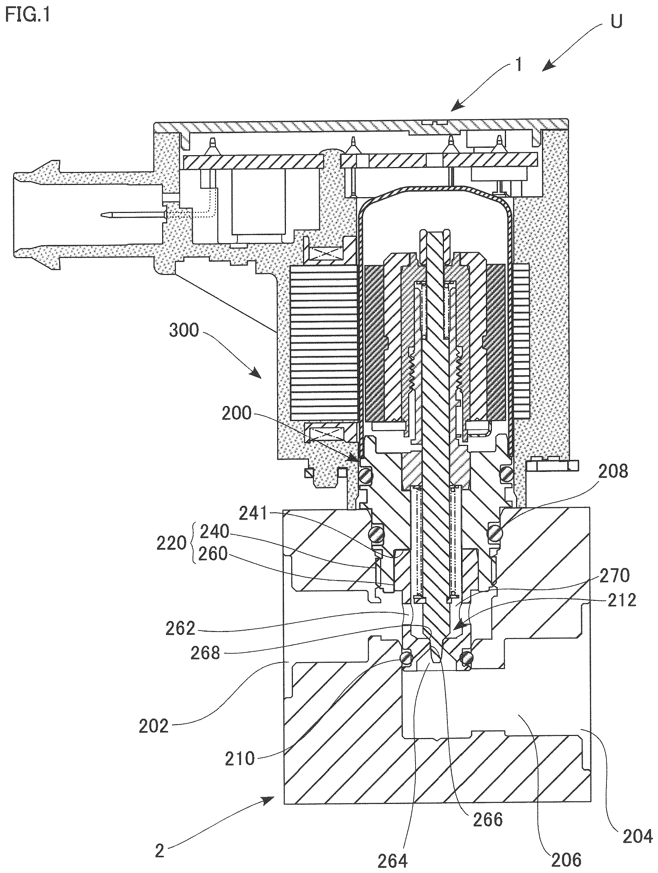

FIG. 1 is a cross-sectional view illustrating a structure of a motor operated valve unit U according to the embodiment. The motor operated valve unit U includes a motor operated valve 1 and a piping body 2. The motor operated valve 1 is applied to a refrigeration cycle of an automotive air conditioner, which is not illustrated. The refrigeration cycle includes a compressor for compressing a circulating refrigerant, a condenser for condensing the compressed refrigerant, an expansion valve for throttling and expanding the condensed refrigerant and delivering the resulting spray of refrigerant, and an evaporator for evaporating the spray of refrigerant to cool the air in a vehicle interior using the evaporative latent heat. The motor operated valve 1 functions as the expansion valve in the refrigeration cycle.

The motor operated valve 1 includes a valve unit 200, and a motor unit 300 mounted thereon. The valve unit 200 includes a body 220 containing a valve section 212. The body 220 functions as a "valve body". The body 220 includes a cylindrical first body 240 and a cylindrical second body 260, which are coaxially mounted.

The first body 240 has a stepped cylindrical shape whose outer diameter decreases downward in a stepwise manner. The first body 240 has a recessed fitting portion 241 having a circular hole shape in a lower part thereof. The second body 260 has a bottomed cylindrical shape. An upper part of the second body 260 is press-fitted in the recessed fitting portion 241. A valve hole 266 is formed to pass through the bottom portion of the second body 260 in the axial direction, and a valve seat 268 is formed at an upper end opening portion of the valve hole 266. An inflow port 262 is formed at the lateral side of the second body 260, and an outflow port 264 is formed at the bottom thereof. A valve chamber 270 is formed inside the first body 240 and the second body 260. The inflow port 262 and the outflow port 264 communicate with each other via the valve chamber 270.

An inlet port 202 and an outlet port 204 are formed at the lateral side of the piping body 2. The inlet port 202 is connected with a pipe extending from the condenser side, and the outlet port 204 is connected with a pipe leading to an inlet of the evaporator. The inlet port 202 communicates with the inflow port 262, and the outlet port 204 communicates with the outflow port 264. The inlet port 202 and the outlet port 204 communicates with each other via a passage 206 formed in the piping body 2.

Annular sealing members 208 and 210 are provided between the first body 240 and the piping body 2 and between the second body 260 and the piping body 2, respectively. This structure prevents leakage of fluid through a clearance between the first body 240 and the piping body 2 and a clearance between the second body 260 and the piping body 2.

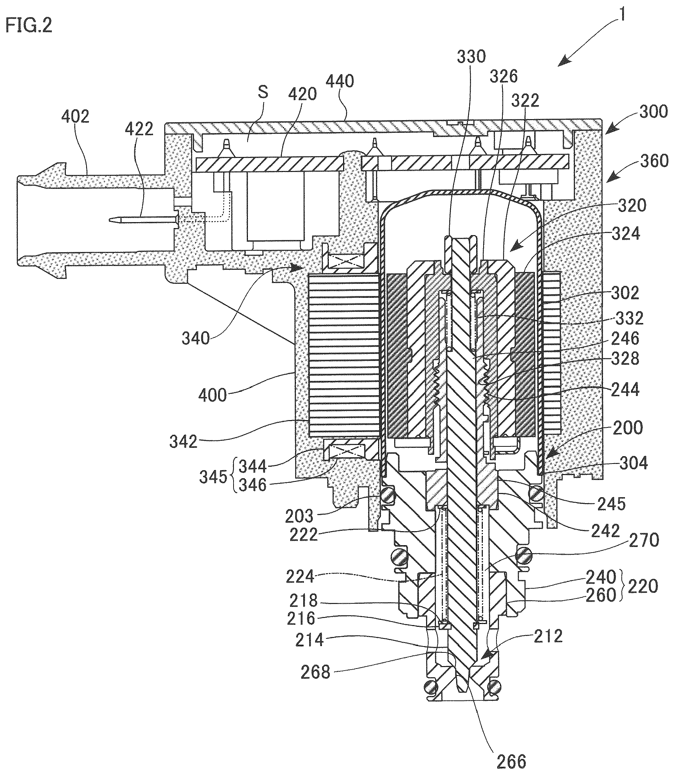

FIG. 2 is a cross sectional view of the motor operated valve 1.

A guiding member 242 is mounted vertically at the center of an upper part of the first body 240. The guiding member 242 is a component made of a metal material by cutting, and has an external thread portion 244 formed on the outer surface of a middle portion in the axial direction of the guiding member 242. A lower end portion of the guiding member 242 has a large diameter, and this large-diameter portion 245 is fixed coaxially to the center of an upper part of the first body 240. A shaft 246 extending from a rotor 320 of the motor unit 300 is inserted in the inner side of the second body 240. A lower end portion of the shaft 246 also serves as a valve element 214 of the valve section 212. The valve element 214 moves toward and away from the valve seat 268 to adjust the opening degree of the valve section 212. The guiding member 242 slidably supports the shaft 246 in the axial direction by the inner surface thereof, and rotatably and slidably supports a rotation shaft 326 of the rotor 320 by the outer surface thereof.

In the valve chamber 270, an E-ring 216 is fitted to a lower portion of the shaft 246. A spring support 218 is provided at an upper position of the E-ring 216. A spring support 222 is also provided under the guiding member 242. A spring 224 that biases the valve element 214 in the closing direction of the valve section 212 is inserted between the two spring supports 218 and 222 coaxially with the valve element 214. In the present embodiment, because the lower end portion of the shaft 246 serves as the valve element 214, the spring 224 also biases the shaft 246 in the valve closing direction.

Next, a structure of the motor unit 300 will be described.

The motor unit 300 is a three-phase stepping motor including the rotor 320 and a stator 340. The motor unit 300 includes a can 302 having a bottomed cylindrical shape. The rotor 320 is located inside the can 302, and the stator 340 is located outside of the can 302. The can 302 is a bottomed-cylindrical member covering a space in which the valve element 214 and a mechanism for driving the valve element 214 are disposed and containing the rotor 320, and defines an internal pressure acting space (internal space) in which the pressure of the refrigerant acts and an external non pressure acting space (external space) in which the pressure of the refrigerant does not act. The can 302 has an open end portion 304 fixed to the first body 240.

The stator 340 includes a laminated core 342 and a bobbin 344. The laminated core 342 is constituted by disc-shaped cores stacked in the axial direction. A coil 346 is wound around the bobbin 344. The coil 346 and the bobbin 344 around which the coil 346 is wound constitute a "coil unit 345". The coil unit 345 is mounted on the laminated core 342.

The stator 340 is integrated with a cylindrical case 400 of the motor unit 300. The case 400 is formed by injection molding of a corrosion-resistant resin (plastic) material. The stator 340 is coated with molding resin by the injection molding (also called "insert molding" or "molding"). The case 400 is constituted by the molding resin.

A cap member 440 is fitted into an upper end opening of the case 400 in such a manner that a projection on a lower face of the cap member 440 is inserted in the upper end opening of the case 400. A circuit board 420 is mounted in a space S surrounded by the case 400 and the cap member 440. The coil 346 is connected with the circuit board 420. The case 400 includes a connector part 402. Specifically, the connector part 402 is formed of the molding resin integrally with the case 400. The connector part 402 integrally includes and protects therein a power supply terminal 422 for supplying power from an external power supply to the circuit board 420. Hereinafter, the stator 340, the case 400, the circuit board 420, the power supply terminal 422, the connector part 402, and the cap member 440 constitute a "stator unit 360".

The rotor 320 includes a cylindrical rotor core 322, and a magnet 324 around the outer circumference of the rotor core 322. The rotor core 322 is mounted on the rotation shaft 326. The magnet 324 is magnetized with a plurality of poles in the circumferential direction.

The rotation shaft 326 is made of a metal material by cutting. The rotation shaft 326 is produced by integrally forming the metal material into a bottomed cylindrical shape. The rotation shaft 326 is mounted (outserted) around the guiding member 242 with its open end facing downward. An internal thread portion 328 formed on the inner surface of the rotation shaft 326 engages with the external thread portion 244 of the guiding member 242. A feed screw mechanism constituted by the thread portions converts the rotational movement of the rotor 320 into the translational movement in the axial direction. The engagement of the internal thread portion 328 and the external thread portion 244 of the feed screw mechanism will be referred to as a "screwed portion".

An upper portion of the shaft 246 is reduced in diameter, and this diameter-reduced portion extends through the bottom of the rotation shaft 326. An annular stopper 330 is fixed to the leading end of the diameter-reduced portion. A back spring 332 that biases the shaft 246 downward (valve closing direction) is provided between the base end of the diameter-reduced portion and the bottom of the rotation shaft 326. With this structure, while the valve section 212 is being opened, the shaft 246 is moved integrally with the rotor 320 in a state in which the stopper 330 is stopped by the bottom of the rotation shaft 326. In contrast, while the valve section 212 is being closed, the back spring 332 is compressed by reaction force that the valve element 214 receives from the valve seat 268. In this process, elastic reaction force of the back spring 332 presses the valve element 214 against valve seat 268, which increases the seating performance (valve closing performance) of the valve element 214.

An annular sealing member 203 is provided between the first body 240 and the case 400. This structure prevents entry of external air (such as moisture) through a clearance between the first body 240 and the case 400.

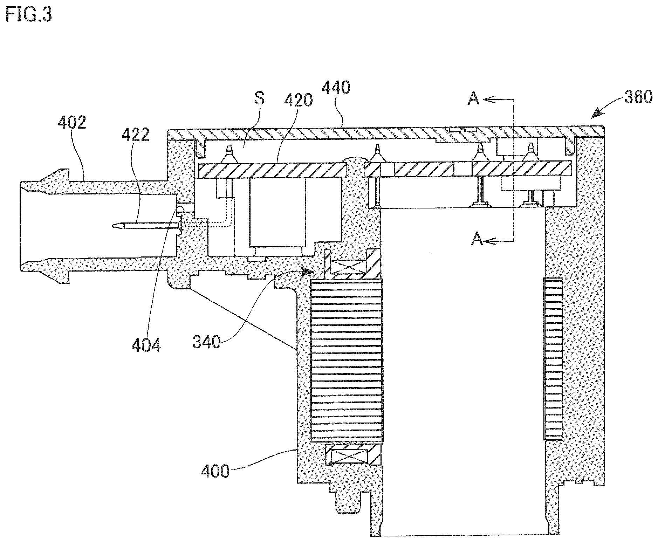

FIG. 3 is a cross-sectional view of a structure of the stator unit 360.

As described above with reference to FIG. 2, the case 400 and the cap member 440 forms the space S. The circuit board 420 is included in the space S.

A leak hole 404 through which the inside of the connector part 402 and the space S communicate with each other is formed in the case 400. Details of the leak hole 404 will be described later.

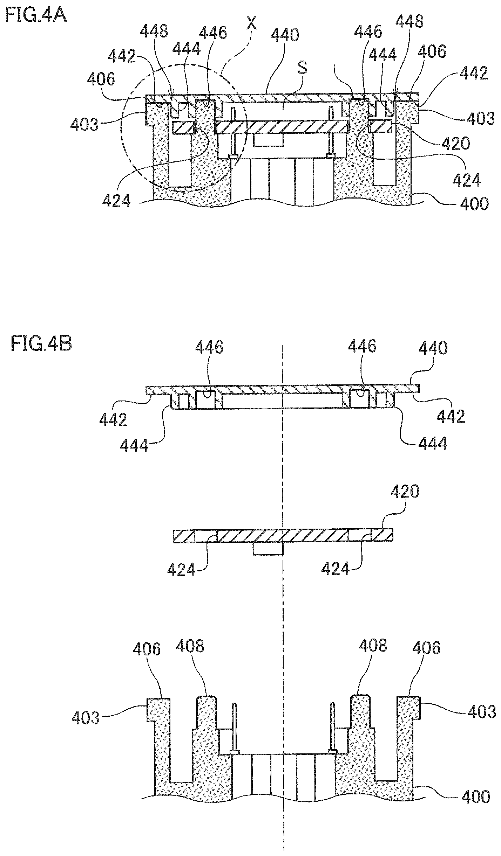

FIGS. 4A and 4B illustrate details of a fitting structure of the case 400 and the cap member 440. FIG. 4A is a cross-sectional view taken along arrows A-A in FIG. 3, and FIG. 4B is an exploded view of the fitting of the case 400 and the cap member 440 in FIG. 4A.

In the present embodiment, an open end portion 403 of the case 400 and the cap member 440 are fitted annularly in such a manner that a projection on the lower face of the cap member 440 is inserted in the upper end opening of the case 400. Thus, the upper face of the open end portion 403 and the lower face of the cap member 440 form an annular contact surface therebetween. The annular contact surface is irradiated with laser, so that the case 400 and the cap member 440 are welded together. Details of the fitting structure of the case 400 and the cap member 440 will be described below.

As illustrated in FIG. 4B, the case 400 has the open end portion 403 and two positioning projections 408 (which function as "positioning members"). The open end portion 403 is a cylindrical part at the upper part of the case 40. The positioning projections 408 for positioning the circuit board 420 with respect to the case 400 are on the inner side of the open end portion 403.

As illustrated in FIGS. 4A and 4B, the cap member 440 has a contact portion 442 having the contact surface, a projection 444 having a rectangular cross section, and recessed portions 446. The contact portion 442 is over the entire circumferential edge of the bottom face of the cap member 440. The projection 444 is formed annularly along the inner side of the contact portion 442 on the bottom surface of the cap member 440. Two recessed portions 446 are formed on the inner side of the projection 444 on the bottom face of the cap member 440.

The contact portion 442 is in contact with an end face 406 (the upper face at the open end portion 403) of the case 400. The projection 444 has an outer circumferential face facing the inner circumferential face of the open end portion 403. The projection 444 and the open end portion 403 form a fitting portion 448 (FIG. 4A).

As illustrated in FIG. 4A, the circuit board 420 is accommodated in the space S formed by the case 400 and the cap member 440. The circuit board 420 has two positioning holes 424. The two positioning projections 408 are inserted in the two positioning holes 424, so that the circuit board 420 is positioned with respect to the case 400. In addition, the two positioning projections 408 are also fitted into the two recessed portions 446 of the cap member 440. This structure enables the cap member 440 to be positioned with respect to the case 400. Thus, the positioning projections 408 have both of the functions of positioning the circuit board 420 with respect to the case 400 and positioning of the cap member 440 with respect to the case 400.

The positioning projections 408 are press-fitted into and fixed to the recessed portions 446. This positions the cap member 440 with respect to the case 400, and keeps the spacing between the outer circumferential face of the projection 444 and the inner circumferential face of the case 400 (the gap of the fitting portion 448) uniform over the entire circumference.

Next, the welding of the case 400 and the cap member 440 will be described.

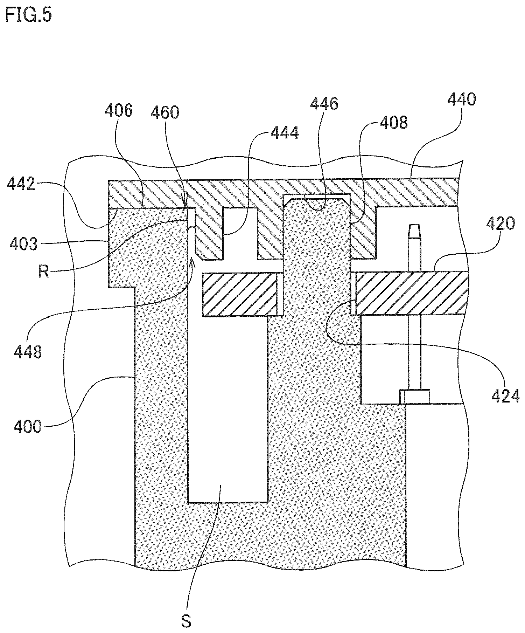

FIG. 5 is an enlarged cross-sectional view of part X in FIG. 4A.

As described above, the fitting portion 448 is formed by the inner circumferential face of the case 400 and the projection 444 of the cap member 440. The contact portion 442 of the cap member 440 is in contact with the end face 406 of the case 400. The cap member 440 is made of a laser transparent resin material, and the case 400 is made of laser absorbing resin material. Laser emitted to the contact portion 442 from the cap member 440 side passes through the cap member 440 and is then absorbed by the end face 406 of the case 400. Heat generated by the absorbed laser melts part of the end face 406 of the case 400. As illustrated in FIG. 5, the melted resin material R enters the gap of the fitting portion 448, and solidifies in such a manner as to bridge between the outer circumferential face of the projection 444 of the cap member 440 and the open end portion 403 of the case 400.

In the present embodiment, the melted resin material R is made to enter the gap of the fitting portion 448, and solidify in such manner as to bridge between the outer circumferential face of the projection 444 of the cap member 440 and the open end portion 403 of the case 400. As a result, the cap member 440 and the case 400 are also welded together at the fitting portion 448 in addition to the contact portion 442, which improves the weldability. Hereinafter, the welded portion of the cap member 440 and the case 400 with the melted resin material R will be referred to as a "welded portion 460" or a "first seal portion".

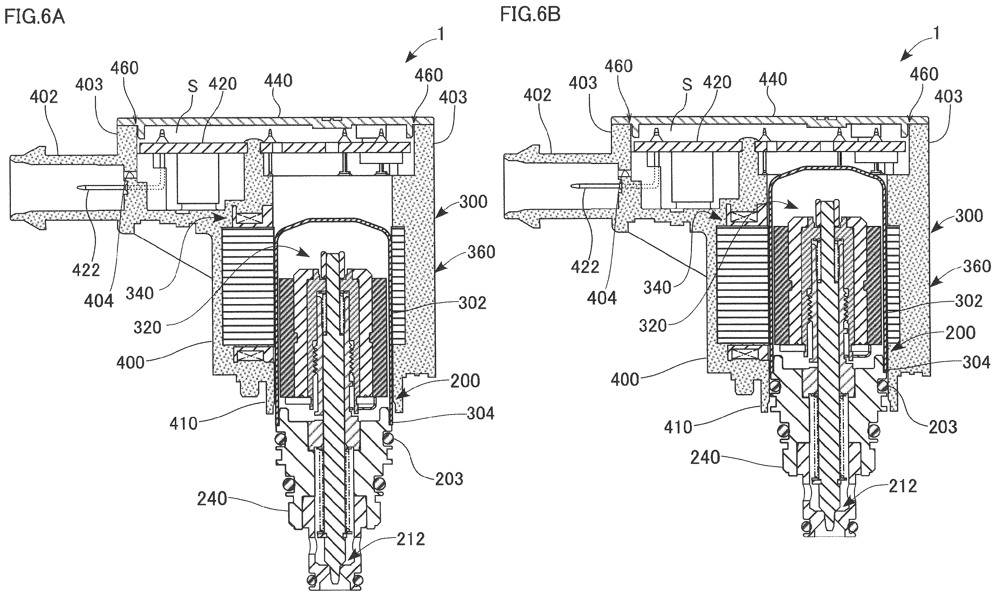

FIGS. 6A and 6B are cross-sectional views illustrating mounting of the stator unit 360 onto the first body 240. FIG. 6A illustrates a state during a mounting process, and FIG. 6B illustrates a state in which the mounting is completed.

Before the mounting, the circuit board 420 is placed in the case 400. In addition, as explained with reference to FIG. 5, the case 400 and the cap member 440 are welded together.

In the mounting, the can 302 is inserted in the stator unit 360 from an open end portion 410 of the case 400 opposite the open end portion 403. The mounting of the stator unit 360 onto the first body 240 is then completed in a state in which the open end portion 410 contains the open end portion 304 of the can 302 and the sealing member 203.

The open end portion 410, which is one of the open end portions of the case 400, is mounted on the first body 240 in such a state in which the sealing member 203 is in contact with the inner circumferential face of the open end portion 410. In addition, the open end portion 403 is welded to the cap member 440 with the welded portion 460. Thus, the case 400 is sealed from the outside at the two open end portions 403 and 410. This structure prevents entry of air outside the case 400 into the space S located in the case 400.

The connector part 402 has the leak hole 404. Before mounting of the stator unit 360 onto the first body 240, the case 400 and the cap member 440 are welded together. Thus, the gas pressure in the space S increases as the can 302 is inserted into the stator unit 360. When this pressure becomes too high, the circuit board 420, etc. accommodated in the space S may be damaged. In the present embodiment, the pressure in the space S leaks to the inside of the connector part 402 through the leak hole 404. This structure prevents the circuit board 420, etc. from being damaged when the can 302 is inserted in the stator unit 360 and the stator unit 360 is mounted on the first body 240.

After the stator unit 360 is mounted on the first body 240, the temperature in the space S changes during operation of the motor operated valve 1. In a case where the leak hole 404 is not present and the case 400 is airtight, the pressure in the space S changes with the temperature change. As this pressure becomes higher, failures such as damage to the circuit board 420, a fracture in the welded portion 460, deformation of the case 400 or the cap member 440, and damage to the coil 346 (see FIG. 2). In contrast, the leak hole 404 formed so that the pressure in the space S leaks to the inside of the connector part 402 prevents damage to the circuit board 420 and the like during operation of the motor operated valve 1.

The leakage of the pressure in the space S during operation of the motor operated valve 1 will be explained in more detail. The connector part 402 is connected with an external connector (not illustrated). A harness is connected with a terminal of the external connector. Thus, the pressure in the space S leaks to the outside via the leak hole 404 and the harness. In addition, a seal ring (not illustrated) is provided between the connector part 402 and the external connector. According to this structure, the leak hole 404 communicates with the inside of the harness, and is sealed from the air outside the motor operated valve 1. Because the space S does not communicate with the outside of the motor operated valve 1, entry of the external air into the space S is prevented even when the leak hole 404 is present.

As described above, according to the present embodiment, the case 400 is formed by the molding resin to contain the stator 340. Thus, the case 400 is formed by one process of molding. In addition, the open end portion 403 of the cylindrical case 400 is welded to the cap member 440, and the open end portion 410 thereof has the sealing member 203 (second seal portion) between the open end portion 410 and the first body 240. The first seal portion and the second seal portion prevent entry of the air into the space S. This ensures the waterproof property of the space S containing the circuit board 420.

According to the present embodiment, the connector part 402 is produced integrally with the case 400 by one molding process. This reduces the number of components of the motor operated valve 1. As the number of components is smaller, the number of portions that need to be sealed between components can be reduced. Thus, entry of external air into the motor operated valve 1 is prevented.

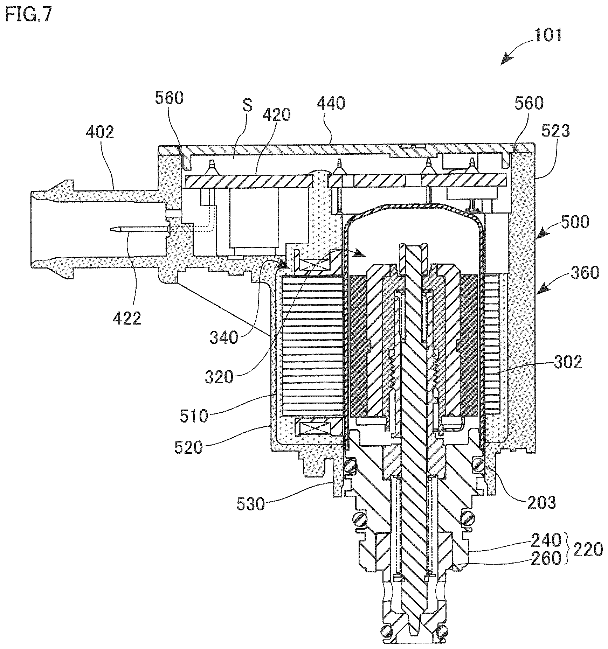

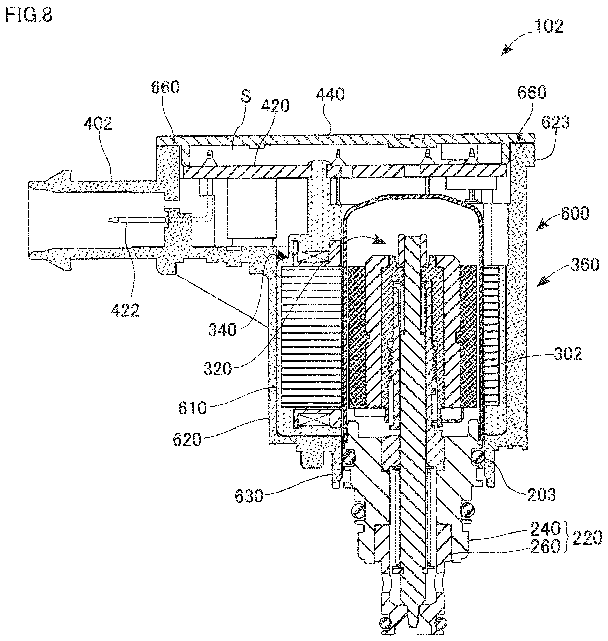

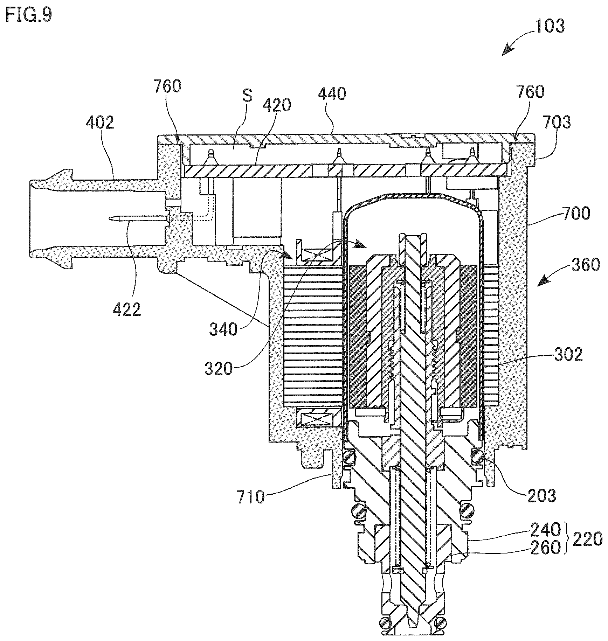

FIGS. 7 to 9 are cross-sectional views of motor operated valves according to modifications of the present embodiment. FIG. 7 illustrates a motor operated valve 101 according to a first modification, FIG. 8 illustrates a motor operated valve 102 according to a second modification, and FIG. 9 illustrates a motor operated valve 103 according to a third modification.

As illustrated in FIG. 7, the motor operated valve 101 according to the first modification is different from the motor operated valve 1 according to the embodiment in the shape of a case 500. The case 500 includes an inner molded part 510 and a cylindrical outer molded part 520. The stator 340 is covered with the inner molded part 510 by molding. The inner molded part 510 made of molding resin is covered with the outer molded part 520 by molding. Thus, the outer molded part 520 is made of molding resin. The connector part 402 is formed integrally with the outer molded part 520.

In the first modification as well, an open end portion 523 of the outer molded part 520 and the cap member 440 are welded to form a welded portion 560. In addition, the sealing member 203 is provided between an open end portion 530 of the outer molded part 520 and the first body 240. The inner molded part 510 is entirely contained in the outer molded part 520. Thus, the inner molded part 510 is not exposed to the outside of the motor operated valve 101. The sealing structures at the two open end portions 523 and 530 prevent entry of external air into the outer molded part 520. In addition, a resin contact portion (between the outer molded part 520 and the inner molded part 510) communicating with the space S is completely isolated from the outside of the motor operated valve 101. Thus, in the first modification as well, entry of external air into the space S is prevented.

In the motor operated valve 101 according to the first modification as well, entry of external air into the space S is prevented, and the waterproof property of the space S is ensured. In terms of sealing property, however, the motor operated valve 1 according to the embodiment constituted by a smaller number of components is more preferable.

As illustrated in FIG. 8, the motor operated valve 102 according to the second modification is different from the motor operated valve 1 according to the embodiment in the shape of a case 600. The case 600 includes an inner molded part 610 and a cylindrical outer molded part 620. The stator 340 is covered with the inner molded part 610 by molding. The outer molded part 620 is obtained by molding in a process different from that of the inner molded part 610. Thus, the outer molded part 620 is made of molding resin. The connector part 402 is formed integrally with the outer molded part 620.

The stator 340 covered with the inner molded part 610 and the circuit board 420 are accommodated in the outer molded part 620. Thereafter, the cap member 440 is provided at the open end portion 523 of the outer molded part 620, and the stator unit 360 is thus produced.

In the second modification as well, an open end portion 623 and the cap member 440 are welded to form a welded portion 660. In addition, the sealing member 203 is provided between an open end portion 630 of the outer molded part 620 and the first body 240. The inner molded part 610 is entirely contained in the outer molded part 620. Thus, the inner molded part 610 is not exposed to the outside of the motor operated valve 102. The sealing structures at the two open end portions 623 and 630 prevent entry of external air into the outer molded part 620. In addition, the contact between the outer molded part 620 and the inner molded part 610 is completely isolated from the outside of the motor operated valve 102. Thus, in the second modification as well, entry of external air into the space S is prevented.

In the motor operated valve 102, the inner molded part 610 and the outer molded part 620 are formed by separate processes, and mounted in a process of mounting the case 600. Thus, the dimensions of the inner molded part 610 and the outer molded part 620 need to be matched. In the case of the motor operated valve 101 of the first modification (see FIG. 7), positioning of the inner molded part 510 and the outer molded part 520 can be readily performed by using a mold for molding of the outer molded part 520. The motor operated valve 101 of the first modification is more preferable than the motor operated valve 102 of the second modification in that the stator 340 can be easily positioned relative to the case 500.

As illustrated in FIG. 9, the motor operated valve 103 according to the third modification is different from the motor operated valve 1 according to the embodiment in the shape of a case 700. In the motor operated valve 103 of the third modification, the stator 340 is not covered with molding resin. The case 700 is obtained by molding in a manner similar to the outer molded part 620 (see FIG. 8) in the second modification. The connector part 402 is formed integrally with the case 700.

The case 700 accommodates the stator 340 and the circuit board 420 therein. Thereafter, the cap member 440 is mounted at an open end portion 703 of the case 700, and the stator unit 360 is thus obtained.

In the third modification as well, the open end portion 703 and the cap member 440 are welded to form a welded portion 760. In addition, the sealing member 203 is provided between an open end portion 710 of the case 700 and the first body 240. The sealing structures at the two open end portions 703 and 710 prevent entry of external air into the case 700. Thus, in the third modification as well, entry of external air into the space S is prevented.

Because the stator 340 is accommodated directly in the case 700, the motor operated valve 103 can be more readily produced than the motor operated valve 101 (see FIG. 7) and the motor operated valve 102 (see FIG. 8) in which the stator 340 is covered with molding resin. Protection of the stator 340 (the coil 346 in FIG. 2) by molding resin, however, facilitates heat dissipation from the coil 346, and enables control of the resistance of the coil 346. In this regard, the motor operated valve 101 and the motor operated valve 102 are more preferable than the motor operated valve 103.

The embodiment of the present invention has been described above. The present invention is not limited to the embodiment and it will be obvious to those skilled in the art that various modifications could be further developed within the technical idea underlying the present invention without departing from the scope of protection defined in the independent claim 1.

In the embodiment described above, welding is used for the first seal portion, and the seal ring is used for the second seal portion. In a modification, a seal ring may be used for the first seal portion. For example, a seal ring may be provided between a projection of the cap member and the inner circumferential face of the case.

In the embodiment described above, the structure in which the second seal portion is provided between the inner circumferential face of the case and the outer circumferential face of the first body has been explained. In a modification not belonging to the invention, a seal ring may be provided as the second seal portion between the inner circumferential face of the case and the outer circumferential face of the can. Note that a structure in which an open end portion of the can is located further inside the case than the second seal portion is implemented in the invention and has the advantage that the welded portion of the open end portion of the can and the body is not corroded by external air.

In the embodiment described above, the motor operated valve in which the valve element touches and leaves the valve seat and the valve section is completely closed in the valve closed state has been described. In a modification, a valve element may be moved into and out of a valve hole like a so-called spool valve, and a slight leakage of fluid may be permitted in the valve closed state.

While the motor operated valve is a motor operated expansion valve in the embodiment described above, the motor operated valve may be an on-off valve or a flow control valve without an expanding function.

In the embodiment described above, the structure in which the valve element and the shaft are integrally formed has been described. In a modification, the structure is not limited thereto, and the valve element and the shaft may be separate members that can move integrally. In this case, the valve element and the shaft may be structurally integrated. Alternatively, the valve element and the shaft may be integrally movable, and also movable relative to each other. For example, the valve element and the shaft may be integrally movable while the valve is being opened, and may be movable relative to each other during valve closing operation, like the motor operated valve described in Japanese Patent Application Publication No. 2016-205584.

In the embodiment described above, the first body 240 and the second body 260 are bodies of the motor operated valve, and the two bodies ae arranged in the piping body 2 to constitute the motor operated valve unit U. In a modification, the first body 240, the second body 260, and the piping body 2 may be structure as bodies of the motor operated valve.

## Claims

1. A motor operated valve comprising:
a body (220);
a valve element (214) that is moved toward and away from a valve hole (266) formed in the body (220) to close and open a valve section (212);
a rotor (320) for driving the valve element (214) in opening/closing directions of the valve section (212);
a can (302) that is a bottomed cylindrical member fixed to the body (220) and containing the rotor (320), and that defines an internal space in which fluid pressure acts and an external space in which fluid pressure does not act; and
a stator unit (360) including a case (400, 500, 600, 700) having a cylindrical shape and made of resin, a stator (340) mounted in the case (400, 500, 600, 700) and coaxially around the can (302), a circuit board (420) mounted in the case (400, 500, 600, 700), a power supply terminal (422) connected with the circuit board (420), a connector part (402) made of resin and integrally including the power supply terminal (422) therein, and a cap member (440), the cap member (440) and the case (400, 500, 600, 700) forming a space (S) containing the circuit board (420), the can bottom being located in the space (S), wherein
the connector part (402) has a leak hole (404) that permits leakage of pressure in the space (S) containing the circuit board (420) to outside and wherein
the connector part (402) is formed integrally with the case (400, 500, 600, 700) by molding resin,
a first seal portion (460, 560, 660, 760) is provided between a first open end portion (403, 523, 623, 703) of the case (400, 500, 600, 700) and the cap member (440), and
a second seal portion (203) is provided between a second open end portion (410, 530, 630, 710) of the case (400, 500, 600, 700) and the body (220), the second seal portion (203) being a seal ring (203),
the seal ring (203) is between an inner circumferential face of the case (400, 500, 600, 700) and an outer circumferential face of the body (220),
an open end portion of the can (302) is located further inside the case (400, 500, 600, 700) than the seal ring (203),
a position of the can (302) fixed to the body (220) is farther from an open end of the second open end portion (410, 530, 630, 710) of the case (400, 500, 600, 700) in an axial direction than the seal ring (203).

2. The motor operated valve according to claim 1, wherein
the stator (340) is formed integrally with the case (400, 500) by the molding resin.

3. The motor operated valve according to claim 1, wherein
the molding resin forms an outer molded part (520, 620), and
the stator (340) is covered with an inner molded part (510, 610) inside the outer molded part (520, 620).

4. The motor operated valve according to any one of claims 1 to 3, wherein
the first seal portion (460, 560, 660, 760) is formed by welding between the open end portion (403, 523, 623, 703) of the case (400, 500, 600, 700) and the cap member (440).

## Patentansprüche

1. Ein motorbetriebenes Ventil, bestehend aus:
einen Körper (220);
ein Ventilelement (214), das zu einem in dem Körper (220) ausgebildeten Ventilloch (266) hin und von diesem weg bewegt wird, um einen Ventilabschnitt (212) zu schließen und zu öffnen;
einen Rotor (320) zum Antrieb des Ventilelements (214) in Öffnungs-/Schließrichtung des Ventilabschnitts (212);
einen Topf (302), der ein mit einem Boden versehenes zylindrisches Element ist, das an dem Körper (220) befestigt ist und den Rotor (320) enthält, und der einen Innenraum, in dem Fluiddruck wirkt, und einen Außenraum, in dem kein Fluiddruck wirkt, definiert; und
eine Statoreinheit (360) mit einem Gehäuse (400, 500, 600, 700), das eine zylindrische Form hat und aus Harz hergestellt ist, einem Stator (340), der in dem Gehäuse (400, 500, 600, 700) und koaxial um den Topf (302) herum montiert ist, einer Leiterplatte (420), die in dem Gehäuse (400, 500, 600, 700) montiert ist, einem Stromversorgungsanschluss (422), der mit der Leiterplatte (420) verbunden ist, ein Verbinderteil (402), das aus Harz hergestellt ist und den Stromversorgungsanschluss (422) darin einschließt, und ein Kappenelement (440), wobei das Kappenelement (440) und das Gehäuse (400, 500, 600, 700) einen Raum (S) bilden, der die Leiterplatte (420) enthält, wobei der Dosenboden in dem Raum (S) angeordnet ist, wobei
das Verbinderteil (402) ein Leckloch (404) aufweist, das ein Entweichen des Drucks in dem Raum (S), der die Leiterplatte (420) enthält, nach außen ermöglicht, und wobei
das Verbinderteil (402) durch Gießen von Harz einstückig mit dem Gehäuse (400, 500, 600, 700) gebildet wird,
ein erster Dichtungsabschnitt (460, 560, 660, 760) zwischen einem ersten offenen Endabschnitt (403, 523, 623, 703) des Gehäuses (400, 500, 600, 700) und dem Kappenelement (440) vorgesehen ist,
und ein zweiter Dichtungsabschnitt (203) zwischen einem zweiten offenen Endabschnitt (410, 530, 630, 710) des Gehäuses (400, 500, 600, 700) und dem Körper (220) vorgesehen ist, wobei der zweite Dichtungsabschnitt (203) ein Dichtungsring (203) ist,
der Dichtungsring (203) zwischen einer inneren Umfangsfläche des Gehäuses (400, 500, 600, 700) und einer äußeren Umfangsfläche des Körpers (220) liegt, wobei ein offener Endabschnitt des Topfs (302) weiter im Inneren des Gehäuses (400, 500, 600, 700) angeordnet ist als der Dichtungsring (203), und
eine Position des am Körper (220) befestigten Topfs (302) von einem offenen Ende des zweiten offenen Endabschnitts (410, 530, 630, 710) des Gehäuses (400, 500, 600, 700) in einer axialen Richtung weiter entfernt ist als der Dichtungsring (203).

2. Motorbetriebenes Ventil nach Anspruch 1, wobei der Stator (340) durch das Gießharz einstückig mit dem Gehäuse (400, 500) ausgebildet ist.

3. Motorbetriebenes Ventil nach Anspruch 1, wobei das Gießharz ein äußeres Formteil (520, 620) bildet und der Stator (340) mit einem inneren Formteil (510, 610) innerhalb des äußeren Formteils (520, 620) bedeckt ist.

4. Motorbetriebenes Ventil nach einem der Ansprüche 1 bis 3, wobei der erste Dichtungsabschnitt (460, 560, 660, 760) durch Schweißen zwischen dem offenen Endabschnitt (403, 523, 623, 703) des Gehäuses (400, 500, 600, 700) und dem Kappenelement (440) gebildet ist.

## Revendications

1. Une vanne motorisée comprenant :
un corps (220) ;
un élément de valve (214) qui est déplacé vers et loin d'un trou de valve (266) formé dans le corps (220) pour fermer et ouvrir une section de valve (212) ;
un rotor (320) pour entraîner l'élément de valve (214) dans les directions d'ouverture/fermeture de la section de valve (212) ;
une boîte (302) qui est un élément cylindrique à fond fixé au corps (220) et contenant le rotor (320), et qui définit un espace interne dans lequel la pression du fluide agit et un espace externe dans lequel la pression du fluide n'agit pas ;
et
une unité statorique (360) comprenant un boîtier (400, 500, 600, 700) de forme cylindrique et en résine, un stator (340) monté dans le boîtier (400, 500, 600, 700) et coaxial autour de la boîte (302), une carte de circuit imprimé (420) montée dans le boîtier (400, 500, 600, 700), une borne d'alimentation (422) connectée à la carte de circuit imprimé (420), une pièce de connexion (402) faite de résine et comprenant intégralement la borne d'alimentation (422), et un élément de capuchon (440), l'élément de capuchon (440) et le boîtier (400, 500, 600, 700) formant un espace (S) contenant la carte de circuit imprimé (420), le fond de la boîte étant situé dans l'espace (S), dans lequel
la partie connecteur (402) possède un trou de fuite (404) qui permet une fuite de pression dans l'espace (S) contenant la carte de circuit imprimé (420) vers l'extérieur et dans lequel
la partie connecteur (402) est formée intégralement avec le boîtier (400, 500, 600, 700) par moulage de résine,
une première portion de joint (460, 560, 660, 760) est prévue entre une première partie d'extrémité ouverte (403, 523, 623, 703) du boîtier (400, 500, 600, 700) et l'élément de capuchon (440),
et une deuxième partie d'étanchéité (203) est prévue entre une deuxième partie d'extrémité ouverte (410, 530, 630, 710) du boîtier (400, 500, 600, 700) et le corps (220), la deuxième partie d'étanchéité (203) étant une bague d'étanchéité (203),
la bague d'étanchéité (203) se trouve entre une face circonférentielle intérieure du boîtier (400, 500, 600, 700) et une face circonférentielle extérieure du corps (220),
une partie de l'extrémité ouverte de la boîte (302) est située plus loin à l'intérieur du boîtier (400, 500, 600, 700) que la bague d'étanchéité (203), une position de la boîte (302) fixée au corps (220) est plus éloignée d'une extrémité ouverte de la deuxième partie d'extrémité ouverte (410, 530, 630, 710) du boîtier (400, 500, 600, 700) dans une direction axiale que la bague d'étanchéité (203).

2. La vanne motorisée selon la revendication 1, dans laquelle le stator (340) est formé intégralement avec le boîtier (400, 500) par la résine de moulage.

3. La vanne motorisée selon la revendication 1, dans laquelle la résine de moulage forme une partie moulée extérieure (520, 620), et le stator (340) est recouvert d'une partie moulée intérieure (510, 610) à l'intérieur de la partie moulée extérieure (520, 620).

4. La vanne motorisée selon l'une des revendications 1 à 3, dans laquelle la première portion de joint (460, 560, 660, 760) est formée par soudage entre la portion d'extrémité ouverte (403, 523, 623, 703) du boîtier (400, 500, 600, 700) et l'élément de capuchon (440).
